# EUROPÄISCHE PATENTSCHRIFT

(11) **EP 3 756 935 B1**
(45) Veröffentlichungstag und Bekanntmachung des Hinweises auf die Patenterteilung: **02.04.2025**
(21) Anmeldenummer: 20182704.5
(22) Anmeldetag: 26.06.2020
(51) Int. Cl.: B60L 53/67, B60L 9/00, B60L 53/68, B60L 53/30, B60M 3/00, B60M 1/36, B61L 3/00, B60M 7/00, B61L 15/00, B60L 55/00

(54) **ELEKTRIFIZIEREN EINES SCHIENENNETZWERKS MITTELS VORHANDENER LADESTATIONEN**
ELECTRIFICATION OF A RAILWAY NETWORK USING EXISTING CHARGING STATIONS
ÉLECTRIFICATION D'UN RÉSEAU FERROVIAIRE AU MOYEN DES STATIONS DE CHARGE EXISTANTES

(30) Priorität: 27.06.2019 DE 102019117417
(43) Veröffentlichungstag der Anmeldung: 30.12.2020
(73) Patentinhaber: ALSTOM Holdings, 93400 Saint-Ouen-sur-Seine (FR)
(72) Erfinder: Buschbeck, Jan, 12109 Berlin (DE)
(74) Vertreter: Patentanwälte Bressel und Partner mbB

(56) Entgegenhaltungen:
- EP-A1- 3 296 146
- WO-A1-2010/023033
- DE-U1- 202017 104 077
- US-A- 3 955 657
- US-A1- 2011 298 422
- US-A1- 2012 316 717
- US-A1- 2015 027 837

## Beschreibung

Die Erfindung betrifft ein Verfahren zum Elektrifizieren eines Schienennetzwerks, ein Verwenden von Ladestationen in einem Schienennetzwerk und ein Schienennetzwerk.

Schienenfahrzeuge können zum Zurücklegen von Fahrstrecken innerhalb eines Schienennetzwerks auf verschiedene Weise angetrieben werden. Es ist bekannt, sogenannte elektrifizierte Schienennetzwerke mit einer Infrastruktur für eine elektrische Energieübertragung an ein Schienenfahrzeug bereitzustellen, wobei die übertragene elektrische Energie überwiegend als Traktionsenergie für das Schienenfahrzeug verwendet wird (bzw. das Schienenfahrzeug im Wesentlichen keine andere Energie zum Erzeugen der Traktionsenergie erhält). Ebenso ist es bekannt, Schienenfahrzeuge mit Verbrennungsmotoren auszustatten. In diesem Fall können die Schienenfahrzeuge auch auf nicht-elektrifizierten Fahrstrecken verkehren und z.B. per Dieselmotor angetrieben werden.

Ein Nachteil von elektrifizierten Schienennetzwerken sind die damit einhergehenden Kosten für die Planung, Errichtung und den Unterhalt der elektrischen Infrastruktur. Die Zeitdauer, bis ein Schienennetzwerk elektrifiziert ist, kann ferner mehrere Jahre betragen.

Ein Nachteil von nicht-elektrifizierten Schienennetzwerken sind die vor Ort entstehenden Schadstoffemissionen der per Verbrennungsmotor angetriebenen Schienenfahrzeuge. Aufgrund des zuletzt genannten Nachteils existieren Bestrebungen, Schienennetzwerke so weit wie möglich zu elektrifizieren.

Bis dieser Zustand erreicht ist, ist als Brückentechnologie vorgeschlagen worden, sogenannte Batterie-Schienenfahrzeuge oder auch Diesel-Hybrid-Schienenfahrzeuge einzusetzen. Diese verfügen über einen elektrisch ladbaren Energiespeicher (Batterie), der elektrische Energie speichern und bei Bedarf für das Erzeugen von Traktionsenergie bereitstellen kann. Das Schienenfahrzeug ist dann nicht darauf angewiesen, unmittelbar in der Umgebung bzw. während der Fahrt auf eine elektrische Infrastruktur zurückzugreifen, um Traktionsenergie zu erzeugen. Stattdessen kann diese Energie dem Energiespeicher entnommen werden. Um den Energiespeicher aufladen zu können, sind innerhalb des Schienennetzwerkes Ladestationen vorgesehen (z.B. an Haltestellen). Ein Beispiel für ein derartiges Schienennetzwerk bzw. Schienenfahrzeug ist der ECO-Train der DB RegioNetz, der z.B. als sogenannte Erzgebirgsbahn in Deutschland verkehrt und dabei Fahrstrecken emissionsfrei auf Basis von seinem Energiespeicher entnommener Traktionsenergie zurücklegt.

Weiterer technologischer Hintergrund findet sich in der DE 10 2015 215 178 A1 und WO 2015/110669 A2.

Nachteile derartiger existierender Lösungen bestehen insoweit, als dass eine Inkompatibilität zwischen den zunächst errichteten Ladestationen und einer späteren (d.h. mehrere Jahre später erfolgenden) Vollelektrifizierung des Schienennetzwerks bzw. einer bestimmten Fahrstrecke vorliegt. Die Erfinder haben erkannt, dass ein Bedarf dafür besteht, die Vereinbarkeit der bisher ausschließlich als Brückentechnologie eingesetzten Ladestationen mit einer späteren (Voll-) Elektrifizierung zu verbessern. Dies bietet zum Beispiel Vorteile hinsichtlich der über die Lebensdauer des Schienennetzwerks entstehenden Kosten.

US 2015/027837 A1 beschreibt ein Schienenwegsystem mit einem Gleis, das einen Abschnitt mit Energieversorgung und einen Abschnitt ohne Energieversorgung aufweist. Entlang dem Abschnitt mit Energieversorgung erstreckt sich ein elektrischer. Das Schienenwegsystem kann ferner eine mit dem elektrischen Kontakt elektrisch verbundene Energieaustauschstation aufweisen. Die Energieaustauschstation kann dazu ausgelegt sein, eine Energieübertragung zwischen der Energieaustauschstation und einem Schienenfahrzeug durch den elektrischen Kontakt zu initiieren, wenn sich das Schienenfahrzeug auf dem angetriebenen Abschnitt des Gleises befindet. Die Energietauschstation kann auch dazu eingerichtet sein, die Energieübertragung zwischen der Energietauschstation und dem Schienenfahrzeug zu unterbrechen, wenn das Schienenfahrzeug den angetriebenen Streckenabschnitt verlässt.

Aus US 2012/316717 A1 ist ein Steuerungssystem bekannt, das einen Controller und ein Energiemanagementsystem umfasst. Der Controller befindet sich an Bord eines Fahrzeugs, das Motoren und eine bordeigene Energiespeichervorrichtung umfasst, die die Motoren antreibt. Das Energiemanagementsystem bestimmt eine angeforderte Menge an elektrischer Energie zum Betreiben des Fahrzeugs basierend auf geschätzten elektrischen Lasten. Die angeforderte Menge an elektrischer Energie basiert auf einer gespeicherten Menge an elektrischer Energie in der bordeigenen Speichervorrichtung. Das Energiemanagementsystem übermittelt die angeforderte Menge an elektrischer Energie an eine oder mehrere Streckenstationen, die entlang der Route angeordnet sind, so dass die Streckenstationen über ausreichend elektrische Energie verfügen, um die bordeigene Energiespeichervorrichtung mit der elektrischen Energie aufzuladen, um die geschätzten elektrischen Lasten zu decken.

US 3 955 657 A beschreibt ein elektrisches Antriebs-Transportsystem mit zumindest einem Fahrzeug und einer Mehrzahl von Stopp-Stationen, wobei zumindest an einigen der Stopp-Stationen ein Kontakt des Fahrzeugs zu einer elektrischen Versorgungsleitung möglich ist.

DE 20 2017 104077 U1 beschreibt eine Energieverteilungsanordnung umfassend ein Gleichstromnetz mit einer Freileitung, die im öffentlichen Verkehrsraum verlegt ist, einen Hauptspeiseknoten, an welchem der Freileitung eine erste Gleichspannung eingespeist wird, und mindestens eine Ladestation, die elektrisch an die Freileitung angeschlossen ist und die eine Spannungsumsetzer aufweist, welcher die erste Gleichspannung in eine Ladespannung umwandelt, die einem Elektromobil oder einem elektrischen Akkumulator zuführbahr ist.

Die Aufgabe der vorliegenden Erfindung besteht darin, Aufwand, Kosten und Umweltbelastungen im Zusammenhang mit Schienennetzwerken zu verringern.

Diese Aufgabe wird durch die Gegenstände der beigefügten unabhängigen Ansprüche gelöst. Vorteilhafte Weiterbildungen sind in den abhängigen Ansprüchen angegeben. Es versteht sich, dass sämtliche einleitend diskutierten Merkmale auch bei der vorliegenden Erfindung vorgesehen sein können, sofern nicht anders angegeben oder ersichtlich.

Eine Grundidee der Erfindung besteht darin, für ein Überbrücken des Zeitraums bis zu einer Vollelektrifizierung eines Schienennetzwerks zunächst in an sich bekannter Weise Ladestationen einzusetzen. Erfolgt jedoch später die Elektrifizierung des Schienennetzwerkes, ist vorgesehen, die bereits errichteten Ladestationen so weit wie möglich weiterzuverwenden. Dies spart Kosten und Aufwand bei der Elektrifizierung des Schienennetzwerks. Insbesondere ist vorgesehen, die Ladestationen zunächst für ein Laden der Energiespeicher von auf dem Schienennetzwerk verkehrenden (Batterie-/Hybrid-) Schienenfahrzeugen zu verwenden. Zum Elektrifizieren des Schienennetzwerkes ist jedoch anschließend vorgesehen, die bereits vorhandenen Ladestationen dazu zu verwenden, um hierüber elektrische Energie für die Elektrifizierung bereitzustellen. Beispielsweise kann diese Energie in ein Schienenverkehrsstromnetz eingespeist werden, das im Rahmen der Elektrifizierung errichtet wird. Insbesondere kann eine Ladestation dazu verwendet werden, Oberleitungen oder Stromschienen, welche von einem Schienenverkehrsstromnetz umfasst sind, mit elektrischer Energie zu versorgen.

Die für eine entsprechende elektrische Energieversorgung eines Schienenverkehrsstromnetzes (bzw. eines elektrifizierten Schienennetzwerks) zusammenwirkenden Ladestationen können somit als ein verteiltes oder dezentrales Unterwerk oder auch als virtuelles Kraftwerk bezeichnet werden. Jede Ladestation kann dabei Funktionen übernehmen, wie sie derzeit von bekannten meist zentralen bzw. leistungsstarken und für ein großflächiges elektrifiziertes Schienennetzwerk vorgesehenen Unterwerken bereitgestellt werden. Unter einem Unterwerk wird hierin allgemein ein Umspannwerk verstanden werden, das Bahnstrom aus einem öffentlichen Stromnetz oder einem Hochspannungsnetz erzeugt bzw. bereitstellt. Die Ladestationen können also jeweils im Sinne eines Umspann(teil)werks für ein späteres Schienenverkehrsstromnnetz verwendet werden.

Neben den bereits erläuterten Vorteilen hinsichtlich reduzierter Kosten und eines reduzierten Aufwandes bei der Voll- oder Teil- Elektrifizierung eines Schienennetzwerks ist dieses Vorgehen dahingehend vorteilhaft, als dass eine redundante Energieversorgung innerhalb des Schienennetzwerks über die Mehrzahl an Ladestationen ermöglicht wird. Kommt es zu einem Ausfall von einer oder mehrerer Ladestationen, kann dies beispielsweise durch Leistungssteigerung der verbleibenden funktionsfähigen Ladestationen ausgeglichen werden. Dies erhöht gegenüber einem zentralen Unterwerk die Ausfallsicherheit. Weitere Vorteile ergeben sich dahingehend, als dass die innerhalb des Schienennetzwerks verteilten Ladestationen individuell angesteuert werden können und vorzugsweise koordiniert angesteuert werden können, um die Energieversorgung innerhalb des Schienennetzwerks lokal anzupassen. Hierdurch kann z.B. auf lokale Spannungsabfälle reagiert werden oder allgemein die elektrische Leistungsfähigkeit eines Schienenverkehrsstromnetzes des Schienennetzwerks lokal angepasst werden.

Unter dem Elektrifizieren eines Schienennetzwerks kann hierin allgemein das Errichten eines Schienenverkehrsstromnetzes der vorstehend und/oder nachstehend erläuterten Art verstanden werden. Hierdurch kann ermöglicht werden, dass eine elektrische Energieversorgung fahrender Schienenfahrzeuge und vorzugsweise über Fahrstrecken von mehreren Kilometern erzielt wird sowie vor allem eine unterbrechungsfreie Stromversorgung über bzw. entlang entsprechender Fahrstrecken. Mit anderen Worten kann bei elektrifizierten Schienennetzwerken allgemein eine Infrastruktur zur elektrischen Energieversorgung auch während der Fahrt und zum im Wesentlichen unmittelbaren (d. h. ohne langfristige Speicherungen in Energiespeichern des Schienenfahrzeugs) Erzeugen von Traktionsenergie bereitgestellt sein.

Im Detail betrifft die Erfindung ein Verfahren zum Elektrifizieren eines Schienennetzwerks, wobei in einer ersten Betriebsphase des Schienennetzwerks eine Mehrzahl von Ladestationen innerhalb des Schienennetzwerks bereitgestellt wird und die Ladestationen jeweils für ein Übertragen von elektrischer Energie aus einem Versorgungsstromnetz an einen elektrischen und/oder elektrisch ladbaren Energiespeicher (wenigstens) eines Schienenfahrzeugs eingerichtet sind; und wobei in einer zweiten Betriebsphase des Schienennetzwerks ein Schienenverkehrsstromnetz in der Weise bereitgestellt wird, dass innerhalb des Schienennetzwerks zumindest bereichsweise eine Stromversorgung eines Schienenfahrzeugs über eine Fahrstrecke von mehreren Kilometern möglich ist (zum Beispiel zum Erzeugen von Traktionsenergie); wobei die Ladestationen in der zweiten Betriebsphase jeweils dazu verwendet werden, um das Schienenverkehrsstromnetz mit Strom zu versorgen. Insbesondere sind die Ladestationen örtlich im Schienennetzwerk verteilt angeordnet, d. h. voneinander beanstandet.

Der Beginn der ersten und der zweiten Betriebsphase kann mehrere Jahre auseinanderliegen, z.B. wenigstens fünf oder wenigstens 10 Jahre. Die Leistung einer Ladestation kann wenigstens 1 MW und vorzugsweise wenigstens 2 MW, 2,5 MW oder auch wenigstens 5 MW betragen. Das Schienenverkehrsstromnetz kann (z.B. durch eine entsprechende Anzahl Ladestationen) allgemein eine Leistung von wenigstens 15 MW oder wenigstens 20 MW aufweisen.

Unter einem Schienennetzwerk kann bereits eine durch das Verlegen von Schienen definierte Fahrstrecke für Schienenfahrzeuge verstanden werden. Diese kann verzweigungsfrei verlaufen (d.h. einzelne Städte oder Stationen entlang einer verzweigungsfreien Fahrstrecke verbinden). Bevorzugt umfasst das Schienenfahrzeug jedoch mehrere Fahrstreckenabschnitte, die an Verzweigungsstellen ineinander übergehen bzw. miteinander verbunden sind, sodass das Schienennetzwerk allgemein als verzweigt bezeichnet werden kann. Ferner kann es sich bei dem Schienennetzwerk um einen definierten Ausschnitt aus einem größeren zusammenhängenden Schienennetzwerk und beispielsweise um einen Teil eines landesgebundenen oder eines Landesgrenzen übergreifenden Schienennetzwerks handeln.

Insbesondere richtet sich die Erfindung auf den Schienennah- bzw. -regionalverkehr, bei dem Fahrstrecken von mehreren 10 km und vorzugsweise wenigstens 100 km zurückgelegt werden (z.B. zum Zurücklegen von Überlandfahrten). Ebenso kann sich die Erfindung aber auch auf den Personennahverkehr richten, der z.B. innerhalb oder nahe von Stadtgebieten stattfindet. In einer Variante umfasst das Schienennetzwerk Fahrstrecken oder Fahrstreckenabschnitte mit einer kumulierten Länge von wenigstens 50 km, wenigstens 100 km oder wenigstens 200 km.

Unter dem Bereitstellen von Ladestationen innerhalb des Schienennetzwerkes kann das Bereitstellen von Ladestationen in unmittelbarer Nähe zu den Schienen bzw. Gleisen des Schienennetzwerks verstanden werden, insbesondere in der Weise, dass die vorstehend angegebene Energieübertragung an Schienenfahrzeuge, die in dem Schienennetzwerk verkehren, ermöglicht wird. Die Ladestationen können z.B. an Haltestellen für die Schienenfahrzeuge angeordnet sein bzw. an oder in Bahnhöfen.

Die Energieübertragung kann zum Beispiel rein elektrisch über elektrische Leitungen zu den Fahrzeugen stattfinden. Es ist jedoch auch möglich, dass elektrische Energie in magnetische oder elektromagnetische Energie umgewandelt wird und drahtlos zu dem Fahrzeug übertragen wird. Dort kann durch magnetische Induktion wieder elektrische Energie erzeugt werden.

Allgemein kann eine Ladestation eine Anordnung von elektrischen Komponenten zum Ermöglichen der Energieübertragung aus dem Versorgungsstromnetz umfassen. Ferner kann die Ladestation, wie nachstehend noch näher erläutert, mit einer Stromübertragungseinrichtung oder, mit anderen Worten, einem Kopplungssystem verbunden sein, das mit dem Schienenfahrzeug in der Weise selektiv verbindbar ist, dass die geschilderte elektrische Energieübertragung erfolgen kann. Hierbei kann es sich z.B. um einen Oberleitungsabschnitt oder eine Stromschiene handeln, die vorzugsweise nicht mehr als die anderthalbfache, doppelte oder dreifache Länge von in dem Schienennetzwerk verkehrenden Schienenfahrzeugen aufweist (zum Beispiel nicht mehr als 200 m).

Im Fall einer induktiven Energieübertragung kann die Ladestation zumindest eine Spule oder Windung einer elektrischen Leitung aufweisen, die das (elektro-) magnetische Feld erzeugt.

Unter einem Schienenfahrzeug kann allgemein ein selbständig angetriebenes und in dem Schienennetzwerk verkehrendes Fahrzeug verstanden werden, das auch aus mehreren Einzelfahrzeugen zusammengesetzt sein kann (also einen Zug bzw. einen Verbund bildet). Das Schienenfahrzeug kann wenigstens einen Triebwagen zum Erzeugen von Traktionsenergie umfassen oder aber wenigstens eine Lokomotive. Zusätzlich können nicht-angetriebene Wagons umfasst sein.

Die Ladestationen können innerhalb des Schienennetzwerks um mehrere Kilometer voneinander beabstandet sein (z.B. wenigstens 10 km, wenigstens 50 km oder wenigstens 100 km). Gemäß einer Variante ist vorgesehen, dass innerhalb des Schienennetzwerks wenigstens zwei der Ladestationen um eine Strecke von wenigstens 30 km und vorzugsweise wenigstens 60 km voneinander beabstandet sind. In dieser Offenbarung enthaltene Streckenangaben können sich auf von den Schienen bzw. Gleisen des Schienennetzwerks definierte Längen einer Fahrstrecke innerhalb des Schienennetzwerks beziehen (d. h. keine Angabe im Sinne einer Luftlinienverbindung sein).

Bei dem elektrischen Versorgungsstromnetz kann es sich um ein öffentliches Stromnetz und/oder ein Hochspannungs-Bahnstromnetz handeln. Gemäß einer Variante wird in dem Versorgungsstromnetz dreiphasiger Wechselstrom mit einer Frequenz von z.B. 50 Hz geführt. Die Ladestationen können allgemein dazu eingerichtet sein, die über das Versorgungsstromnetz bereitgestellte Energie zu wandeln (d.h. die Spannung und/oder den Strom des Versorgungsstromnetzes zu wandeln), sodass dieser an die Schienenfahrzeuge übertragen werden kann. Hierfür kann die Ladestation geeignete Komponenten wie z.B. wenigstens einen Wechselrichter und wenigstens einen Gleichrichter umfassen und/oder allgemein Strom- und/oder Spannungswandler umfassen. Wie geschildert kann das Schienenverkehrsstromnetz eine elektrische Infrastruktur zum Ermöglichen eines elektrifizierten Betriebs des Schienennetzwerks umfassen, beispielsweise in Form von Oberleitungen und/oder Stromschienen, die entlang der Schienen des Schienennetzwerks errichtet werden. Hierüber kann allgemein eine (unterbrechungsfreie) Stromversorgung fahrender Schienenfahrzeuge ermöglicht werden, wobei eine Stromversorgung über eine Fahrstrecke von wenigstens 10 km, wenigstens 50 km oder wenigstens 100 km vorgesehen sein können. Insbesondere kann eine entsprechende Stromversorgung und vor allem eine unterbrechungsfreie Stromversorgung entlang einer Fahrstrecke erfolgen, die sich durch mehrere Haltestellen bzw. Bahnhöfe hindurch erstreckt.

Auch in der zweiten Betriebsphase können die Ladestationen dazu verwendet werden, die über das Versorgungsstromnetz bereitgestellte elektrische Energie zu wandeln, sodass eine gewünschte Versorgung des Schienenverkehrsstromnetzes möglich ist (d.h. die Spannung und/oder den Strom des Versorgungsstromnetzes entsprechend zu wandeln). Beispielsweise kann über das Schienenverkehrsstromnetz eine einphasige Stromversorgung mit einer gegenüber dem Versorgungsstromnetz reduzierten Frequenz erfolgen (z.B. 16,7 Hz im Schienenverkehrsstromnetz gegenüber bis zu 50 Hz im Versorgungsstromnetz). Weiter kann in dem Schienenverkehrsstromnetz eine gegenüber dem Versorgungsstromnetz veränderte Spannung von 15 kV gewünscht sein. Sämtliche vorstehenden Werte können auch bereits in der ersten Betriebsphase vorgesehen sein.

Auch wenn die Ladestationen in der zweiten Betriebsphase unter Umständen nicht mehr zum gezielten Laden von Schienenfahrzeuge verwendet werden, sondern das Schienenverkehrsstromnetz versorgen, mit dem auch Schienenfahrzeuge versorgbar sind, die unter Umständen gar keinen aufladbaren Energiespeicher oder zumindest keine aufladbare Traktionsbatterie umfassen, werden die Ladestationen hierin aufgrund ihrer ursprünglichen Funktion auch in der zweiten Betriebsphase als Ladestation bezeichnet. Die Ladestationen in der zweiten Betriebsphase werden jedoch auch als Energieeinspeisungseinrichtungen für das Schienenverkehrsstromnetz bezeichnet und werden als solche betrieben.

Die Ladestationen können als einzige (d.h. ausschließliche) Energieeinspeisungseinrichtungen für das Schienenverkehrsstromnetz vorgesehen sein. Mit anderen Worten kann kein weiteres Unterwerk oder keine von den Ladestationen unabhängige Energieeinspeisungseinrichtung für das Schienenverkehrsstromnetz von dem Schienennetzwerk umfasst sein, vorzugsweise aber wenigstens eine um 10 größere Anzahl von Ladestation gegenüber etwaigen Unterwerken.

Für den Wechsel von der ersten zur zweiten Betriebsphase können die Ladestationen stationär an ihren ursprünglichen Orten verbleiben. Umrüstungen können sich darauf beschränken, die Ladestation in geeigneter Weise mit dem Schienenverkehrsstromnetz oder einer nachstehend erläuterten optionalen Steuereinrichtung zu verbinden. Werden nachfolgend erläuterte Stromübertragungseinrichtungen, die mit den Ladestationen bereits in der ersten Betriebsphase verbunden sind, in das Schienenverkehrsstromnetz integriert, können an den Ladestationen selbst keine weiteren Modifikationen erforderlich sein, um diese mit dem Schienenverkehrsstromnetz zu verbinden.

Nachfolgend werden Weiterbildungen des Verfahrens, aber auch von weiteren Gegenständen der Erfindung geschildert, wie einer nachstehend erläuterten Verwendung, einem Schienennetzwerk, einer Ladestation sowie einem Ladestationsnetzwerk. Es versteht sich, dass bei jedem dieser Gegenstände innerhalb dieser Offenbarung erläuterte Varianten, Weiterbildungen oder optionale Merkmale ebenso vorgesehen sein können, auch wenn dies in dem jeweiligen Zusammenhang nicht explizit wiederholt wird. Dies betrifft insbesondere gleichlautende Verfahrens- und Vorrichtungsmerkmale. Weiter können sämtliche von der Erfindung umfasste Anordnungen oder Vorrichtungen dazu eingerichtet sein, erfindungsgemäße Verfahren auszuführen.

Eine Weiterbildung des vorstehenden Verfahrens sowie der hierin definierten weiteren Erfindungsgegenstände sieht vor, dass jeder Ladestation (wenigstens) eine Stromübertragungseinrichtung zugeordnet ist, um elektrische Energie an den elektrisch ladbaren Energiespeicher eines Schienenfahrzeugs zu übertragen. Wie vorstehend geschildert, können die Stromübertragungseinrichtungen Oberleitungsabschnitte und/oder Stromschienen umfassen. Diese können sich mit einer begrenzten Länge innerhalb des Schienennetzwerks erstrecken und z.B. weniger 10 m oder weniger als 100 m umfassen (insbesondere nicht mehr als 200 m oder nicht mehr als 400 m). Dies ermöglicht, dass die Schienenfahrzeuge im Stillstand und zum Beispiel über mehrere entlang des Schienenfahrzeugs verteilte Stromabnehmer, die selektiv mit der Stromübertragungseinrichtung in Kontakt gebracht werden können, mit elektrischer Energie versorgt werden können, welche wiederum durch die Ladestation aus dem Versorgungsstromnetz entnommen wird. Eine Ladestation und dazugehörige Stromübertragungseinrichtung können somit in der ersten Betriebsphase eine lokale oder, mit anderen Worten, örtlich begrenzte Stromversorgung innerhalb des Schienennetzwerks bereitstellen, was auch als eine Inselversorgung bezeichnet werden kann (d.h. die Ladestation sowie Stromübertragungseinrichtung bilden Energieversorgungsinseln innerhalb des nicht elektrifizierten Schienennetzwerks).

In diesem Zusammenhang kann ferner vorgesehen sein, dass die Stromübertragungseinrichtungen in der zweiten Phase zumindest teilweise in das Schienenverkehrsstromnetz integriert werden. Beispielsweise können dann, wenn die Stromübertragungseinrichtungen lokal errichtete Oberleitungs- oder Stromschienenabschnitte sind, diese jeweils in Oberleitungen oder Stromschienen des Schienenverkehrsstromnetzes integriert werden bzw. mit hiervon umfassten Oberleitungen und/oder Stromschienen verbunden werden. Hierdurch können Kosten gespart werden und kann der Aufwand zur Elektrifizierung des Schienennetzwerks begrenzt werden. Insbesondere kann dann erreicht werden, dass über die Ladestation unmittelbar eine Speisung des Schienenverkehrsstromnetzes erfolgen kann, ohne dass die Ladestationen mit dem Schienenverkehrsstromnetz in gesonderter Weise zum Beispiel durch Verlegen zusätzlicher Leitungen verbunden werden müssen.

Eine Weiterbildung des Verfahrens und der weiteren Erfindungsgegenstände sieht vor, dass die Ladestationen in der ersten und/oder zweiten Betriebsphase gemäß wenigstens einer der folgenden Varianten betrieben werden:
- die Ladestationen wandeln eine Frequenz eines Eingangsstroms um und reduzieren diese vorzugsweise (z.B. von 50 Hz auf 16,7 Hz);
- die Ladestationen wandeln eine Eingangsspannung um und reduzieren diese vorzugsweise (z.B. auf nicht mehr als 15 kV);
- die Ladestationen wandeln einen mehrphasigen Eingangsstrom in einen einphasigen Ausgangsstrom um.

Wie erwähnt, können die Ladestationen mit Stromübertragungseinrichtungen, wie zum Beispiel mit Oberleitungsabschnitten oder Stromschienen, verbunden sein, und zwar bereits in der ersten Betriebsphase. Es wird bevorzugt, diese Stromübertragungseinrichtungen auch in der zweiten Betriebsphase weiter zu verwenden. Sie können dann durch Ergänzen weiterer Stromübertragungseinrichtungen miteinander verbunden werden und/oder in eine zusammenhängende Stromübertragungsinfrastruktur eingebunden werden.

Dabei versteht es sich, dass sich der Eingangsstrom und die Eingangsspannung auf das Versorgungsstromnetz beziehen und der Ausgangsstrom auf einen Strom, der zur Versorgung des Schienenverkehrsstromnetzes (im Folgenden auch Netzspeisung) oder für das Laden der Schienenfahrzeug-Energiespeicher bereitgestellt wird.

Eine Weiterbildung des Verfahrens und der weiteren Erfindungsgegenstände sieht vor, dass spätestens zu Beginn der zweiten Betriebsphase die Ladestationen mit einer (zum Beispiel zentralen und baulich separat von den Ladestationen oder dezentral verteilten und insbesondere baulich in die Ladestationen integrierten) Steuereinrichtung verbunden werden, die dazu eingerichtet ist, den Betrieb der Ladestationen zu steuern. Hierfür kann jede Ladestation mit wenigstens einer Kommunikationsschnittstelle ausgebildet sein, die spätestens zu Beginn der zweiten Betriebsphase aktiviert und/oder mit der Steuereinrichtung verbunden wird. Die Kommunikation (bzw. die Kommunikationsschnittstelle) kann allgemein kabelgebunden oder kabellos erfolgen (bzw. ausgebildet sein). Beispielsweise können kabelgebundene Kommunikationsverbindungen bei Errichtung des Schienenverkehrsstromnetzes für die zweite Betriebsphase mit verlegt oder errichtet werden, um die Ladestation mit der Steuereinrichtung zu verbinden. Alternativ kann eine Kommunikation über Mobilfunk oder WLAN erfolgen.

Die Steuereinrichtung kann von wenigstens einer der bereits in der ersten Betriebsphase errichteten Ladestation umfasst bzw. baulich hierin integriert sein. Insbesondere kann sie über mehrere Ladestationen dezentral verteilt sein. Alternativ kann die Steuereinrichtung separat von den Ladestationen bereitgestellt sein (d.h. örtlich separat und/oder allgemein extern hiervon). Die Steuereinrichtung kann allgemein dazu eingerichtet sein, Signale an die Ladestationen zu übermitteln, um deren Betrieb zu steuern.

Zumindest während der zweiten Betriebsphase kann die Steuereinrichtung ferner dazu eingerichtet sein, eine Synchronisierung der Einspeisepunkte sicherzustellen, die durch die einzelnen Ladestationen definiert werden. Insbesondere kann dabei die Frequenzlage der Ladestationen synchronisiert werden.

Vorzugsweise ist die Steuereinrichtung ferner dazu eingerichtet, Zustandssignale der Ladestation und/oder des Schienenverkehrsstromnetzes oder aber auch anderweitige, den Zustand des Schienennetzwerks betreffende Signale zu empfangen. Beispielsweise kann die Steuereinrichtung Informationen zu einem Fahrplan erhalten und/oder zu einer Positionierung von Schienenfahrzeugen innerhalb des Schienennetzwerkes, um lokal entstehende Energiebedürfnisse innerhalb des Schienenverkehrsstromnetzes zu ermitteln und, vorzugsweise, die Ladestationen geeignet anzusteuern (beispielsweise die von den Ladestationen eingespeiste Leistung lokal zu erhöhen oder zu verringern). Wie angedeutet, besteht ein Vorteil dieser Lösung darin, mit den dezentralen Ladestationen, die als Energieeinspeiseeinrichtungen für das Schienenverkehrsstromnetz dienen, auf Betriebszustände des Schienenverkehrsnetzes flexibel reagieren zu können.

Zusätzlich oder alternativ kann die Steuereinrichtung die Funktionsfähigkeit der Ladestationen überwachen und z.B. Fehler feststellen und/oder durch Ansteuern weiterer Ladestationen (insbesondere durch Veranlassen einer Leistungserhöhung einzelner Ladestationen) eine Fehlerhaftigkeit anderer Ladestationen ausgleichen.

Bei einer weiteren Ausführungsform des Verfahrens und der weiteren Erfindungsgegenstände ist die Steuereinrichtung dazu eingerichtet, den Betrieb wenigstens einer Ladestation in Abhängigkeit der folgenden Größen zu steuern:
- einem Verhältnis des Energiebedarfs innerhalb des Schienenverkehrsstromnetzes (d.h. von mit dem Schienenverkehrsstromnetz verbundenen elektrischen Verbrauchern) und einer mittels des Schienenverkehrsstromnetzes bereitstellbaren Energie (-menge) (d.h. einer aktuell in dem Schienenverkehrsstromnetz vorhandenen und/oder kurzfristig mittels der Ladestationen einspeisbaren Energie (-menge);
- einem lokalen Spannungsabfall innerhalb des Schienenverkehrsstromnetzes;
- einer von wenigstens einer anderen Ladestation in das Schienenverkehrsstromnetz eingespeisten elektrischen Energie und/oder dem Feststellen einer Fehlfunktion von wenigstens einer anderen Ladestation;
- einem leistungsabhängigen Wirkungsgrad der Ladestation, wobei sich die Leistung insbesondere auf eine dem Schienenverkehrsstromnetz bereitgestellte Leistung bzw. darin eingespeiste Energie beziehen kann;
- einem Risiko für das Auftreten von Schieflasten in dem Versorgungsstromnetz, insbesondere bei einer Speisung der Bahnseite mit Wechselstrom mit einer Frequenz von 50 Hz. Die Ladestationen können jeweils für sich genommen einen Symmetrierumrichter umfassen oder mit einem solchen Zusammenwirken, um eine Last gleichmäßig auf die Phasen eines speisenden Stromnetzes (Landesnetz) zu verteilen und hierdurch Schieflasten zu vermeiden. Hierfür sind Steuersignale einer mehrere Ladestationen steuernden Steuereinrichtung nicht per se zwingend, da jede Ladestation für sich genommen Schieflasten vermeiden kann. Alternativ kann die Steuereinrichtung je Ladestation eine jeweils entnommene Last je Phase des Versorgungsstromnetzes ermitteln und kann den Betrieb der Ladestationen bzw. deren Lastabnahme derart steuern, dass die Lastentnahmen je Phase im Wesentlich gleich sind (d.h. keine Schieflasten auftreten) oder zumindest eine maximal zulässige Schieflast nicht überschritten wird.

Wird ein erhöhter Energiebedarf gegenüber der (aktuell) bereitstellbaren Energiemenge festgestellt, kann die Steuereinrichtung wenigstens eine der Ladestationen dazu veranlassen, die aktuell eingespeiste Energiemenge zu erhöhen. Wird hingegen ein verringerter Energiebedarf festgestellt, der insbesondere unterhalb der (aktuell) bereitstellbaren Energiemenge liegt, kann die Ladestation hingegen in einen reduzierten Betriebsmodus gebracht werden, beispielsweise durch Reduzieren der hiervon eingespeisten elektrischen Energie. Insbesondere kann die Ladestation in einen Stand-by-Modus versetzt werden, in dem vorzugsweise lediglich sicherheitsrelevante (Kurzspannungsdetektion) und/oder kommunikationsrelevante Funktionen aufrechterhalten werden, aber keine signifikante Energieeinspeisung in das Stromnetz erfolgt.

Zusätzlich oder alternativ kann ein Rückspeisen von elektrischer Energie durch die Fahrzeuge z.B. bei Nutzbremsen ermöglicht werden und können die Ladestationen für ein entsprechendes Rückspeisen angesteuert werden (siehe auch nachstehend weitere Diskussion hierzu). Es kann aufgrund des Preisunterschiedes zwischen bezogener und zurückgespeister Energie vorteilhaft sein, die rückgespeiste Energie selbst zu verbrauchen, anstatt diese in ein Landesnetz zurückzuspeisen. Die Ladestationen können entsprechend eingerichtet sein, die rückgespeiste Energie geeignet zu leiten (zum Beispiel zu einem lokalen Energiespeicher).

Ein derartiges bedarfsweises Schalten von Ladestationen in einen Stand-by-Modus mittels der Steuereinrichtung ist ein eigenständiger Aspekt der vorliegenden Erfindung, der unabhängig von dem weiteren im Zusammenhang mit den vorigen Ausführungsbeispielen erläuterten Details beansprucht werden kann.

Es versteht sich ferner, dass der Energiebedarf wie auch die bereitstellbare Energiemenge für einzelne Bereiche des Schienenverkehrsstromnetzes ermittelt werden können (d.h. lokal festgestellt werden können) und auch lediglich in diesen Bereichen angeordnete bzw. diese versorgende Ladestationen entsprechend gesteuert werden können. Insbesondere können für das gesamte Schienenverkehrsstromnetz lokale Energiebedürfnisse ermittelt werden und dortige Ladestationen und insbesondere die Gesamtheit der Ladestationen an die entsprechend lokalen Energiebedürfnisse angepasst werden, beispielsweise durch Erhöhen oder Reduzieren der hiervon jeweils eingespeisten lokalen Energie.

Der Energiebedarf kann durch Energiemesseinrichtungen innerhalb des Schienenverkehrsstromnetzes ermittelt werden. Ebenso kann der Energiebedarf z.B. aus Informationen zu einem Fahrplan und/oder aktuell in dem Schienennetzwerk verkehrenden Schienenfahrzeugen geschätzt werden. Die bereitstellbare Energiemenge kann z.B. aus aktuellen Leistungsdaten der Ladestationen ermittelt oder geschätzt werden, welche z.B. von den Ladestationen an die Steuereinrichtung übermittelt werden können.

Durch Steuern des Betriebs einer Ladestation in Abhängigkeit von Betriebszuständen bzw. Funktionsfähigkeiten wenigstens einen anderen Ladestation kann eine koordinierte oder, mit anderen Worten, zusammenwirkende, vernetzte oder auch intelligente Steuerung der Ladestation erfolgen. Beispielsweise können auf diese Weise Störungen von einer Ladestationen ausgeglichen werden (z.B. durch Erhöhen der Leistungen der verbleibenden funktionsfähigen Ladestationen). Weiter ist dies auch dann relevant, wenn die Ladestationen allgemein bei einem möglichst hohen Wirkungsgrad betrieben werden sollen. Dieser Wirkungsgrad ist in an sich bekannter Weise leistungsabhängig, sodass es vorteilhaft sein kann, die Ladestationen in der Weise koordiniert zu steuern, dass diese möglichst nahe an ihrem jeweiligen optimalen Wirkungsgrad betrieben werden.

Bei einer Weiterbildung des Verfahrens und der weiteren Erfindungsgegenstände erfolgt spätestens in der zweiten Betriebsphase eine zumindest temporäre Rückspeisung von elektrischer Energie aus dem Schienenverkehrsstromnetz über wenigstens eine der Ladestationen in das Versorgungsstromnetz. Hierfür können die Ladestationen (vorzugsweise von vornherein, also bereits während der ersten Betriebsphase) dazu eingerichtet sein, eine geeignete Energieumwandlung vorzunehmen, also insbesondere eine zu den vorstehend erläuterten Varianten entgegengesetzte Strom- und/oder Spannungswandlung. Dies betrifft insbesondere eine Erhöhung der Frequenz auf diejenige des Versorgungsstromnetzes, eine etwaige Spannungserhöhung und/oder das Umwandeln von einphasigem Strom aus dem Schienenverkehrsstromnetz in mehrphasigen Strom für das Versorgungsstromnetz. Dies ist z.B. dann relevant, wenn die Schienenfahrzeuge dazu eingerichtet sind, rekuperierte Bremsenergie oder auch anderweitige Energie aus z.B. ihrem Energiespeicher wieder in das Schienenverkehrsstromnetz zurückzuspeisen. Allgemein ausgedrückt können die Ladestationen gemäß dieser Variante also dazu eingerichtet sein, Energie in das Versorgungsstromnetz zurückzuspeisen bzw. jeweils mit einer Rückspeisefunktion ausgebildet sein.

Die Erfindung betrifft ferner das Verwenden von Ladestationen in einem Schienennetzwerk, wobei die Ladestationen vorzugsweise zum Laden eines elektrisch ladbaren Energiespeichers eines Schienenfahrzeugs verwendet werden oder verwendet wurden, für das Bereitstellen einer Stromversorgung für ein Schienenverkehrsstromnetz des Schienennetzwerks, welches innerhalb des Schienennetzwerks eine zumindest bereichsweise Stromversorgung eines Schienenfahrzeugs über eine Fahrstrecke von mehreren Kilometern (z.B. wenigstens 50 km) ermöglicht. Die Ladestationen können bereits innerhalb des Schienennetzwerks vorhanden sein, um z.B. in einer vorstehend erläuterten ersten Betriebsphase Energiespeicher von Schienenfahrzeugen aus einem Versorgungsstromnetz elektrisch laden zu können. Spätestens nach dem Errichten eines Schienenverkehrsstromnetzes zum Elektrifizieren des Schienennetzwerks können die (vorzugsweise bereits vorhandenen) Ladestationen dann dazu verwendet werden, um z.B. während einer vorstehend erläuterten zweiten Betriebsphase das Schienenverkehrsstromnetz mit Energie zu speisen (d.h. eine sogenannte Netzspeisung vorzunehmen).

Die Erfindung betrifft ferner ein Schienennetzwerk mit:
- einem Schienenverkehrsstromnetz, das für eine Stromversorgung eines Schienenfahrzeugs über eine Fahrstrecke von mehreren Kilometern innerhalb des Schienennetzwerks eingerichtet ist; und
- einer Mehrzahl von Ladestationen, die das Schienenverkehrsstromnetz mit Strom versorgen und, vorzugsweise, die z.B. während einer oben erläuterten ersten Betriebsphase zum Laden eines elektrisch ladbaren Energiespeichers eingerichtet sind und während einer darauffolgenden zweiten Betriebsphase für ein solches Laden eingerichtet waren.

Diese Variante betrifft also insbesondere die vorstehend erläuterte zweite Betriebsphase, in der vorhandene Ladestationen verwendet werden, um ein Schienenverkehrsstromnetz mit elektrischer Energie zu speisen.

Allgemein ist im Rahmen der vorliegenden Offenbarung zu berücksichtigen, dass Ladestationen auch dann noch als Ladestationen bezeichnet werden, wenn diese in der zweiten Betriebsphase nicht mehr zwingend zum Laden elektrischer Energiespeicher von Schienenfahrzeugen vorgesehen sind, sondern für eine Speisung des Schienenverkehrsstromnetzes zwecks Elektrifizierung des Schienennetzwerks.

Analog zu den vorigen Beispielen können die Ladestationen in diesem Zusammenhang ferner jeweils an ein Versorgungsstromnetz angeschlossen sein, um aus diesem elektrische Energie zur Versorgung des Schienenverkehrsstromnetzes zu entnehmen. Zusätzlich oder alternativ können die Ladestationen jeweils mit einer Steuereinrichtung verbunden sein und die Steuereinrichtung kann dazu eingerichtet sein, den Betrieb der Ladestationen zu steuern.

Weiter betrifft die Erfindung eine Ladestation für ein Schienennetzwerk, die für ein Übertragen von elektrischer Energie aus einem Versorgungsstromnetz an einen elektrisch ladbaren Energiespeicher eines Fahrzeugs eingerichtet ist und die eine Kommunikationsstelle umfasst, um mit einer den Betrieb mehrerer Ladestationen steuernden Steuereinrichtung verbunden zu werden. Zusätzlich kann die Ladestation auch eine Stromübertragungseinrichtung der vorstehend erläuterten Art umfassen oder aber Bestandteil einer Anordnung für ein Schienennetzwerk sein, das eine solche Stromübertragungseinrichtung wie auch eine entsprechende Ladestation umfasst. Dies bedeutet, dass die Ladestationen bzw. Anordnung aus Ladestation und Stromübertragungseinrichtung von vornherein dazu ausgelegt sein können bzw. sein kann, um spätestens in der zweiten Betriebsphase mit einer gemeinsamen Steuereinrichtung verbunden zu werden.

Schließlich betrifft die Erfindung auch ein Ladestationsnetzwerk für ein Schienennetzwerk, umfassend eine Mehrzahl von Ladestationen, und eine Steuereinrichtung, wobei die Ladestationen mit der Steuereinrichtung verbunden sind und die Steuereinrichtung dazu eingerichtet ist, den Betrieb der Ladestationen zu steuern. Die Ladestationen sind dabei vorzugsweise jeweils für ein Übertragen von elektrischer Energie aus einem Versorgungsstromnetz an ein Schienenverkehrsstromnetz des Schienennetzwerks eingerichtet.

Im Folgenden werden Ausführungsformen der Erfindung anhand der beigefügten schematischen Figuren erläutert. Es stellen dar:
- Fig. 1: eine schematische Darstellung eines Schienennetzwerks gemäß einer Ausführungsform während einer ersten Betriebsphase; und
- Fig. 2: eine schematische Darstellung des Schienennetzwerks aus Fig. 1 während einer zweiten Betriebsphase.

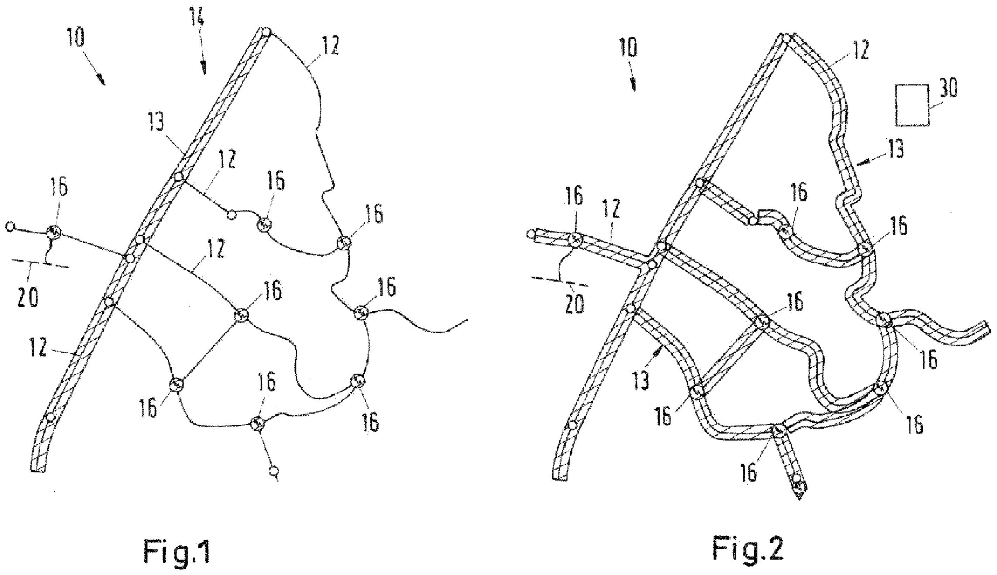

Im Folgenden wird anhand der Figuren 1 und 2 ein erfindungsgemäßes Verfahren sowie ein erfindungsgemäßes Schienennetzwerk erläutert. Es versteht sich, dass sich die Ausführungen ebenso auf die weiteren Erfindungsgegenstände in Form eines Ladestationsnetzwerks, einer Ladestation sowie dem Verwenden von Ladestationen richten.

Lediglich beispielhaft wird dabei ein gesamtes Schienennetzwerk 10 von nicht bzw. nur teilelektrifiziert zu vollelektrifiziert umgestaltet. Dies ist aber nicht zwingend. Erfindungsgemäß sind auch Mischformen möglich, bei denen das Schienennetzwerk 10 nur bereichsweise vollelektrifiziert wird, wofür die dortigen Ladestationen aus einer ersten Betriebsphase in der nachstehend geschilderten Weise weiterverwendet werden.

In Fig. 1 ist ein Schienennetzwerk 10 gezeigt. Dieses ist Bestandteil eines übergeordneten Schienennetzwerks, das in Fig. 1 nicht gesondert dargestellt ist, oder, anders ausgedrückt, ist an nicht dargestellte weitere Schienenwege und/oder Fahrstrecken angeschlossen, sodass Schienenfahrzeuge in das Schienennetzwerk 10 hinein und aus diesem wieder herausfahren können. Das Schienennetzwerk 10 umfasst mehrere Fahrstreckenabschnitte 12, von denen einige, aber nicht sämtliche in Fig. 1 mit einem gesonderten Bezugszeichen versehen sind. Die einzelnen Fahrstreckenabschnitte 12 umfassen jeweils eine Länge von mehreren Kilometern, beispielsweise jeweils wenigstens 10 km. Die insgesamt in dem Schienennetzwerk vorhandenen Fahrstrecken bzw. Schienenwege weisen eine kumulierte Länge von wenigstens 100 km auf, z.B. wenigstens 200 km.

Bei dem Schienennetzwerk 10 handelt es sich ferner um ein Fernverkehrsnetz (zum Beispiel ein Regionalbahnnetz), um Haltestellen bzw. Bahnhöfe insbesondere von unterschiedlichen Städten miteinander zu verbinden, wobei wenigstens einige der aufeinanderfolgenden Haltestellen/Bahnhöfe um mehrere 10 km voneinander beabstandet sind. Weiter verkehren in dem Schienennetzwerk nicht gesondert dargestellte Schienenfahrzeuge, z.B. in Form von Regional- oder Fernverkehrszügen.

Das Schienennetzwerk 10 weist eine erste elektrifizierte Fahrstrecke 14 auf, die in Fig. 1 per Schraffur hinterlegt ist und sich weitestgehend geradlinig von links unten nach rechts oben erstreckt. Entlang dieser Fahrstrecke 14 können Schienenfahrzeuge elektrifiziert fahren. Hierfür umfasst das Schienennetzwerk entlang dieser Fahrstrecke 14 ein nicht gesondert dargestelltes Schienenverkehrsstromnetz 13 z.B. in Form einer Oberleitung, die aus einem öffentlichen Stromnetz und über ein optional zwischengeschaltetes Unterwerk mit Strom versorgt wird. Von dieser elektrifizierten Fahrstrecke 14 zweigen mehrere kürzere Fahrstreckenabschnitte 12 ab, von denen einige in Fig. 1 mit dem Bezugszeichen 12 versehen sind. Diese Fahrstreckenabschnitte 12 sind jeweils nicht schraffiert hinterlegt und folglich auch nicht elektrifiziert. Entlang dieser Fahrstrecken ist somit keine elektrische Infrastruktur bereitgestellt, die es einem Schienenfahrzeug ermöglicht, im Fahrbetrieb sowie zum Aufrechterhalten dieses Fahrbetriebs elektrische (Traktions-) Energie aus einem (dort nicht vorhandenen) Schienenverkehrsstromnetz 13 zu entnehmen. Bei bisherigen Lösungen müssen die Schienenfahrzeuge entlang derartiger nicht elektrifizierter Fahrstrecken deshalb in der Regel per Dieselmotor betrieben werden, was zu einem direkten Emissionsausstoß vor Ort führt.

Erfindungsgemäß ist stattdessen vorgesehen, innerhalb des Schienennetzwerks 10 Ladestationen 16 zu verteilen. Diese sind in Fig. 1 jeweils schematisch durch ein Blitz-Symbol angedeutet und befinden sich an einzelnen Haltestellen, was jedoch nicht zwingend ist. Die Ladestationen 16 können analog zu dem in Deutschland bereits eingesetzten ECO-Train der DB RegioNetz ausgebildet sein und aus einem in Fig. 1 für eine der Ladestationen 16 schematisch angedeuteten öffentlichen Versorgungsstromnetz 20 elektrische Energie entnehmen. Weiter können sie diese elektrische Energie in geeigneter Weise umwandeln und über nicht dargestellte Stromübertragungseinrichtungen (z.B. Oberleitungsabschnitte von mehreren 10 m oder bis zu 200 m oder aber Stromschienen) an an den Haltestellen stehende Fahrzeuge übertragen. Diese Energie kann zum Laden von elektrisch ladbaren Energiespeichern (Batterien) der Schienenfahrzeuge verwendet werden. Diese können daraufhin ihre Fahrt entlang der nicht elektrifizierten Teilstrecken emissionsfrei fortsetzen, da sie die erforderliche Traktionsenergie aus ihrem Energiespeicher beziehen können. Die Ladestationen 16 sind derart innerhalb der Schienennetzwerks 10 verteilt, dass die Reichweite der Energiespeicher der Schienenfahrzeuge wenigstens ausreicht, um von einer Ladestation 16 zur nächsten Ladestation 16 zu fahren.

In dem gezeigten Beispiel handelt es sich bei dem Versorgungsstromnetz 20 um ein öffentliches dreiphasiges Wechselstromnetz mit einer Frequenz von 50 Hz. Die Ladestation 16 ist dazu eingerichtet, hieraus einphasigen Wechselstrom mit einer reduzierten Frequenz von 16,7 Hz zu erzeugen. Weiter ist sie dazu eingerichtet, die Spannung des Versorgungsstromnetzes 20, die wenigstens um das Anderthalbfache und z.B. das wenigstens Zweifache oder wenigstens Dreifache höher liegt, auf eine Spannung von 15 kV zu reduzieren. Die elektrische Energie kann nach der entsprechenden Spannungs- und Stromumwandlung dann mit der nicht gesondert dargestellten Stromübertragungseinrichtung, welche mit der Ladestation 20 verbunden ist bzw. gemeinsam hiermit eine stationäre Lade-Anordnung bildet, an ein Schienenfahrzeug übertragen zu werden.

Der in Fig. 1 gezeigte Fall stellt eine erste Betriebsphase des Schienennetzwerks 10 dar, der einen Übergangszustand zwischen der Teilelektrifizierung des Schienennetzwerks 10 (oder auch einer gänzlich fehlenden Elektrifizierung) und einer eigentlich gewünschten Voll-Elektrifizierung darstellt. Dieser zweite Betriebszustand einer Vollelektrifizierung ist in Fig. 2 gezeigt.

Dort erkennt man zunächst, dass sämtliche Fahrstreckenabschnitte 12 schraffiert hinterlegt sind und somit elektrifiziert wurden. Hierfür wurden entlang der sämtlicher Fahrstreckenabschnitte 12 ein Schienenverkehrsstromnetz 13 errichtet, z.B. durch Errichten von Oberleitungen und/oder Stromschienen. Innerhalb des Schienennetzwerks 10 können somit Schienenfahrzeuge unter einer dauerhaften (d.h. unterbrechungsfreien) Stromversorgung über Fahrstrecken von mehreren 10 km und vorzugsweise wenigstens 50 km fahren. Die Traktionsenergie beziehen sie dabei überwiegend oder auch vollständig aus dem Schienenverkehrsstromnetz 13.

Man erkennt, dass sich die Ladestationen 16 nach wie vor an denselben Positionen wie in Figur 1 befinden und in das nun das gesamte Schienennetzwerk 10 versorgende bzw. überspannende Schienenverkehrsstromnetz 13 integriert wurden. Genauer gesagt werden die Ladestationen 16 nach wie vor von dem Versorgungsstromnetz 20 mit elektrischer Energie versorgt, wie auch in Fig. 2 für eine ausgewählte der Ladestationen 16 gesondert dargestellt. Allerdings speisen die Ladestationen 16 nun nicht mehr nur ihre lokalen Stromübertragungseinrichtungen bzw. hiermit verbundene Energiespeicher von Schienenfahrzeugen. Stattdessen speisen die Ladestationen 16 nun das Schienenverkehrsstromnetz 13, welches für eine Energieübertragung über Fahrstrecken von mehreren Kilometern und insbesondere während einer Fahrt (d.h. mit einer von 0 km/h verschiedenen Geschwindigkeit) eines Schienenfahrzeugs innerhalb des Schienennetzwerks 10 ausgelegt ist.

Statt also das Schienenverkehrsstromnetz 13 in üblicher Weise mit einem zentralen Unterwerk und optionalen Trafostation zu versorgen, erfolgt die Stromversorgung dezentral über die Mehrzahl von in dem Schienennetzwerk 10 verteilten Ladestationen 16. Dabei übernimmt jede Ladestation 16 die Aufgaben herkömmlicher Unterwerke bzw. stellt analoge Funktionen bereit, indem sie die vorstehend erläuterten Strom- und Spannungswandlungen ausführt. Erfindungsgemäß können aber auch Mischformen vorgesehen sein, bei der ein herkömmliches Unterwerk bereitgestellt ist, zusätzlich aber Energieeinspeisung über die verteilten Ladestationen 16 erfolgt.

Ein Vorteil der gezeigten Lösung ist zunächst, dass die in Fig. 1 gezeigten Ladestationen 16 zum Erzielen der Vollelektrifizierung in Fig. 2 beibehalten werden können und somit nach erfolgter Vollelektrifizierung weiterverwendet werden bzw. eine solche Vollelektrifizierung erst ermöglichen. Dieses Weiterbenutzen der bereits vorhandenen elektrischen Infrastruktur aus Fig. 1 reduziert die Investitionskosten und den Umrüstaufwand und macht das Errichten von Ladestationen 16 als Vorbereitung einer späteren Vollelektrifizierung wirtschaftlich attraktiver.

Weiter wird durch die im Schienennetzwerk 10 verteilten Ladestationen 16, welche ein das Schienennetzwerk 10 überspannendes Schienenverkehrsstromnetz 13 elektrisch speisen, die Betriebssicherheit erhöht. Die Ladestationen 16 bilden nämlich eine Anordnung von redundanten Energieeinspeiseeinrichtungen, wobei Ausfälle einzelner Ladestationen 16 durch Leistungssteigerungen anderer Ladestationen 16 zumindest teilweise kompensiert werden können.

Allgemein (d. h. auch unabhängig von dem vorliegenden Ausführungsbeispiel) sieht die Erfindung eine Leistung pro Ladestation von wenigstens 1 MW und vorzugsweise wenigstens 2 MW, 2,5 MW oder auch wenigstens 5 MW vor. Das Schienenverkehrsstromnetz 13 kann (z.B. durch eine entsprechende Anzahl Ladestationen) allgemein eine Leistung von 20 MW aufweisen.

Ein weiterer Vorteil ergibt sich dadurch, dass in Fig. 2 jede der Ladestationen 16 mit einer gemeinsamen zentralen Steuereinrichtung 30 verbunden ist. Dies erfolgt in dem gezeigten Beispiel per Mobilfunk, sodass keine gesonderten Signalübertragungsleitungen zwischen den Ladestationen 16 und der Steuereinrichtung 30 erforderlich sind. Die Steuereinrichtung 30 erhält von den Ladestationen 16 Informationen bezüglich ihrer jeweiligen aktuellen Betriebsgrößen, beispielsweise einer aktuell eingespeisten Leistung. Weiter ist die Steuereinrichtung 30 dazu eingerichtet, durch Übermitteln von Steuersignalen den Betrieb (z.B. die jeweils eingespeiste Leistung) der einzelnen Ladestationen 16 zu steuern. Die Steuereinrichtung 30 kann zusätzliche Informationen empfangen oder über solche verfügen (d.h. aus einem Speicher auslesen), welche auf einen aktuellen Energiebedarf innerhalb des Schienennetzwerks 10 schließen lassen. Der dieser Energiebedarf kann auf den Fahrbetrieb innerhalb des Schienennetzwerks 10 zurückzuführen sein.

Übergeordnet ist die Steuereinrichtung 30 dazu eingerichtet, den Betrieb der Ladestationen 16 derart koordiniert zu steuern, dass der Energiebedarf im Schienennetzwerk 10 gedeckt ist, dass Störungen einzelner Ladestationen 16 ermittelt werden und gegebenenfalls durch Erhöhen der Leistungen anderer Ladestationen 16 ausgeglichen werden und dass die Ladestationen 16 durch eine koordinierte Energieeinspeisung jeweils möglichst nahe an ihrem optimalen Wirkungsgrad betrieben werden.

Die oben genannten Vorteile ergeben sich allgemein auf daraus, dass durch Beibehalten der Ladestationen 16 aus Fig. 1 eine dezentrale Stromversorgung des Schienenverkehrsstromnetzes 13 aus Fig. 2 ermöglicht wird oder, mit anderen Worten, ein dezentrales Unterwerk errichtet wird, dessen Energieeinspeisung lokal mittels der einzelnen Ladestationen 16 angepasst werden kann.

Abschließend ist hervorzuheben, dass beim Übergang der Betriebsphase aus Fig. 1 zur Betriebsphase aus Fig. 2 bereits bestehende Stromübertragungseinrichtungen, welche mit den einzelnen Ladestationen 16 verbunden sind, insbesondere in Form von bereits existierenden Oberleitungsabschnitten mit einer Länge von wenigstens 10 m oder maximal 200 m beibehalten und in das gemäß Fig. 2 errichtete und das gesamte Schienennetzwerk 10 überspannende Schienenverkehrsstromnetz 13 integriert werden können. An den Ladestationen 16 selbst müssen daher keine Modifikationen erfolgen, da diese die Energie über ihre beibehaltenen bzw. integrierten Stromübertragungseinrichtungen, die auch bereits bei der Betriebsphase aus Fig. 1 vorhanden waren, einspeisen können. Auch dies mindert den Elektrifizierungsaufwand des gesamten Schienennetzwerks 10 sowie die damit einhergehenden Kosten.

## Patentansprüche

1. Verfahren zum Elektrifizieren eines Schienennetzwerks (10),
wobei in einer früheren, ersten Betriebsphase des Schienennetzwerks (10) eine Mehrzahl von Ladestationen (16) innerhalb des Schienennetzwerks (10) bereitgestellt wird und die Ladestationen (16) jeweils für ein Übertragen von elektrischer Energie aus einem Versorgungsstromnetz (20) an einen elektrisch ladbaren Energiespeicher eines Schienenfahrzeugs eingerichtet sind; **dadurch gekennzeichnet, dass**
in einer späteren, zweiten Betriebsphase des Schienennetzwerks (10) ein im Rahmen einer Elektrifizierung errichtetes Schienenverkehrsstromnetz (13) in der Weise bereitgestellt wird, dass innerhalb des Schienennetzwerks (10) zumindest bereichsweise eine Stromversorgung eines Schienenfahrzeugs über eine Fahrstrecke von mehreren Kilometern möglich ist, wobei die Stromversorgung entlang der Fahrstrecke durch die Elektrifizierung der Fahrstrecke ermöglicht ist;
wobei die bereits in der ersten Betriebsphase vorhandenen Ladestationen (16) in der zweiten Betriebsphase jeweils als Energieeinspeisungseinrichtungen dazu verwendet werden, Energie in das Schienenverkehrsstromnetz (13) einzuspeisen, um das Schienenverkehrsstromnetz (13) mit Strom zu versorgen, und ein Unterwerk des Schienenverkehrsstromnetzes (13) zu bilden.

2. Verfahren nach Anspruch 1,
wobei jeder Ladestation (16) eine Stromübertragungseinrichtung zugeordnet ist, um elektrische Energie an den elektrisch ladbaren Energiespeicher eines Schienenfahrzeugs zu übertragen.

3. Verfahren nach Anspruch 2,
wobei die Stromübertragungseinrichtungen (16) in der zweiten Betriebsphase zumindest teilweise in das Schienenverkehrsstromnetz (13) integriert werden.

4. Verfahren nach einem der vorangehenden Ansprüche, wobei die Ladestationen (16) für den Wechsel von der ersten zur zweiten Betriebsphase stationär an ihren ursprünglichen Orten verbleiben und mit dem Schienenverkehrsstromnetz (13) und/oder einer Steuereinrichtung verbunden werden.

5. Verfahren nach einem der vorangehenden Ansprüche,
wobei die Ladestationen (16) in der ersten und/oder zweiten Betriebsphase gemäß wenigstens einer der folgenden Varianten betrieben werden:
- die Ladestationen (16) wandeln eine Frequenz eines Eingangsstroms aus dem Versorgungsstromnetz (20) um;
- die Ladestationen (16) wandeln eine Eingangsspannung des Versorgungsstromnetzes (20) um;
- die Ladestationen (16) wandeln einen mehrphasigen Eingangsstrom aus dem Versorgungsstromnetz (20) in einen einphasigen Ausgangsstrom um.

6. Verfahren nach einem der vorangehenden Ansprüche,
wobei spätestens zu Beginn der zweiten Betriebsphase jede Ladestation (16) mit einer Steuereinrichtung (30) verbunden wird, die den Betrieb der Ladestationen (16) steuert.

7. Verfahren nach Anspruch 6,
wobei die Steuereinrichtung (30) den Betrieb wenigstens einer Ladestation (16) in Abhängigkeit von wenigstes einer der folgenden Größen steuert:
- einem Verhältnis des Energiebedarfs von mit dem Schienenverkehrsstromnetz (13) verbundenen elektrischen Verbrauchern und einer mittels des Schienenverkehrsstromnetzes (13) bereitstellbaren Energie;
- einem lokalen Spannungsabfall innerhalb des Schienenverkehrsstromnetzes (13);
- einer von wenigstens einer anderen Ladestation (16) in das Schienenverkehrsstromnetz (13) eingespeisten elektrischen Energie und/oder einer Funktionsunfähigkeit einer anderen Ladestation (16);
- einem leistungsabhängigen Wirkungsgrad der Ladestation (16);
- einem Risiko für das Auftreten von Schieflasten in dem elektrischen Versorgungsstromnetz (20).

8. Verfahren nach einem der vorangehenden Ansprüche,
wobei spätestens in der zweiten Betriebsphase eine zumindest temporäre Rückspeisung von elektrischer Energie aus dem Schienenverkehrsstromnetz (13) über wenigstens eine Ladestation (16) in das Versorgungsstromnetz (20) erfolgt.

9. Verwenden von Ladestationen (16) in einem Schienennetzwerk (10), die in einer früheren, ersten Betriebsphase des Schienennetzwerks (10) zum Laden von elektrisch ladbaren Energiespeichern von Schienenfahrzeugen verwendet wurden, zum Bereitstellen einer Stromversorgung für ein im Rahmen einer Elektrifizierung errichtetes Schienenverkehrsstromnetz (13) des Schienennetzwerks (10) in einer späteren, zweiten Betriebsphase des Schienennetzwerks (10) durch Einspeisung von Energie in das Schienenverkehrsstromnetz (13), wobei die Ladestationen ein Unterwerk des Schienenverkehrsstromnetzes bilden, und
wobei das Schienenverkehrsstromnetz (13) eine zumindest bereichsweise Stromversorgung eines Schienenfahrzeugs (10) innerhalb des Schienennetzwerks (10) über eine Fahrstrecke von mehreren Kilometern ermöglicht, wobei die Stromversorgung entlang der Fahrstrecke durch die Elektrifizierung der Fahrstrecke ermöglicht ist.

10. Schienennetzwerk (10), mit:
- einem im Rahmen einer Elektrifizierung errichtetes Schienenverkehrsstromnetz (13), das für eine Stromversorgung eines Schienenfahrzeugs über eine Fahrstrecke von mehreren Kilometern innerhalb des Schienennetzwerks (10) eingerichtet ist, wobei die Stromversorgung entlang der Fahrstrecke durch eine Elektrifizierung der Fahrstrecke ermöglicht ist; und
- einer Mehrzahl von Ladestationen, die in einer früheren, ersten Betriebsphase des Schienennetzwerks (10) zum Laden eines elektrisch ladbaren Energiespeichers eines Schienenfahrzeugs eingerichtet waren und die in einer späteren, zweiten Betriebsphase des Schienennetzwerks (10) das Schienenverkehrsstromnetz (13) durch Einspeisung von Energie mit Strom versorgen;
wobei die bereits in der ersten Betriebsphase vorhandenen Ladestationen (16) in der zweiten Betriebsphase jeweils als Energieeinspeisungseinrichtungen dazu eingerichtet sind, Energie in das Schienenverkehrsstromnetz (13) einzuspeisen, um das Schienenverkehrsstromnetz (13) mit Strom zu versorgen, und ein Unterwerk des Schienenverkehrsstromnetzes (13) zu bilden.

11. Schienennetzwerk (10) nach Anspruch 10,
wobei die Ladestationen (16) jeweils an ein Versorgungsstromnetz (20) angeschlossen sind, um aus diesem elektrische Energie zur Versorgung des Schienenverkehrsstromnetzes (13) zu entnehmen.

12. Schienennetzwerk (10) nach Anspruch 10 oder 11,
wobei die Ladestationen (16) jeweils mit einer Steuereinrichtung (30) verbunden sind und die Steuereinrichtung (30) dazu eingerichtet ist, den Betrieb der Ladestationen (16) zu steuern.

13. Schienennetzwerk (10) nach einem der Ansprüche 10 bis 12,
wobei die Ladestationen (16) in der zweiten Betriebsphase jeweils eine Kommunikationsschnittstelle umfassen, über die sie mit einer den Betrieb der Ladestationen (16) steuernden Steuereinrichtung (30) verbunden sind.

## Claims

1. A method for electrifying a rail network (10), a plurality of charging stations (16) being provided within the rail network (10) in an earlier, first operating phase of the rail network (10), and the charging stations (16) each being adapted for transferring electrical energy from a supply power network (20) to an electrically chargeable energy storage device of a rail vehicle;
**characterized in that**
in a later, second operating phase of the rail network (10), a rail traffic power network (13), that has been set up as part of an electrification, is provided in such a way that, within the rail network (10) at least in some areas, it is possible to supply power to a rail vehicle over a travel distance of several kilometers, wherein the power supply along the travel distance is made possible by the electrification of the travel distance;
wherein the charging stations (16) already present in the first operating phase are each used in the second operating phase as energy feed devices to feed energy into the rail transportation power network (13) in order to supply the rail traffic power network (13) with electricity and to form a substation of the rail traffic power network (13).

2. The method according to claim 1,
wherein each charging station (16) is assigned a power transmission device in order to transmit electrical energy to the electrically chargeable energy store of a rail vehicle.

3. The method according to claim 2,
wherein the power transmission devices (16) are at least partially integrated into the rail traffic power network (13) in the second operating phase.

4. The method according to one of the preceding claims, wherein the charging stations (16) for the change from the first to the second operating phase remain stationary at their original locations and connected to the rail traffic power network (13) and/or a control device.

5. The method according to one of the preceding claims,
wherein the charging stations (16) are operated in the first and/or second operating phase according to at least one of the following variants:
- the charging stations (16) convert a frequency of an input current from the supply power network (20);
- the charging stations (16) convert an input voltage of rail traffic power network (13);
- the charging stations (16) convert a polyphase input current from the power supply network (20) into a single-phase output current.

6. The method according to one of the preceding claims,
wherein, at the latest at the beginning of the second operating phase, each charging station (16) is connected to a control device (30) which controls the operation of the charging stations (16).

7. The method according to claim 6, wherein the control device (30) controls the operation of at least one charging station (16) in dependence on at least one of the following variables:
- a ratio of the energy demand of electrical loads connected to the rail traffic power network (13) and an electrical load connected by means of the energy that can be provided by means of the rail traffic power network (13);
- a local voltage drop within the rail traffic power network (13);
- a power supply from at least one other charging station (16) into rail traffic power network (13) from at least one other charging station (16) and/or an inoperability of another charging station (16);
- a power-dependent efficiency of the charging station (16);
- a risk for the occurrence of unbalanced loads in the power supply network (20).

8. The method according to one of the preceding claims,
wherein, at the latest in the second operating phase, an at least temporary feed-back of electrical energy from the rail traffic power network (13) into the power supply network (20) takes place via at least one charging station (16).

9. A use of charging stations (16) in a rail network (10), which were used in an earlier, first operating phase of the rail network (10) for charging electrically chargeable energy storage devices of rail vehicles, for providing a power supply for a rail traffic power network (13) of the rail network (10) established as part of an electrification in a later, second operating phase of the rail transportation network (10) by feeding energy into the rail traffic power network (13), wherein the charging stations form a substation of the rail transportation power network, and
wherein the rail traffic power network (13) provides power supply of a rail vehicle (10) within the rail network (10) over a travel distance of several kilometers,
the power supply along the travel distance being made possible by the electrification of the route.

10. A rail network (10), with:
- a rail traffic power network (13) established as part of an electrification, which is arranged for supplying power to a rail vehicle over a travel distance of several kilometers within the rail network (10), the power supply along the travel distance being made possible by an electrification of the route; and
- a plurality of charging stations which, in an earlier, first operating phase of the rail network (10), were set up for charging an electrically chargeable energy storage device of a rail vehicle and which, in a later, second operating phase of the rail network (10), supply the rail traffic power network (13) with power by feeding in energy;
wherein the charging stations (16) already present in the first operating phase used in the second operating phase are each adapted as energy feed devices to feed energy into the rail traffic power network (13) in order to supply the rail traffic power network (13) with energy, and to form a substation of the rail traffic power network (13).

11. The rail network (10) according to claim 10,
wherein the charging stations (16) are each connected to a supply power network (20) in order to withdraw electrical energy from the latter to supply the rail traffic power network (13).

12. The rail network (10) according to claim 10 or 11,
wherein the charging stations (16) are each connected to a control device (30) and the control device (30) is adapted to control the operation of the charging stations (16).

13. The rail network (10) according to one of claims 10 to 12,
wherein the charging stations (16) in the second operating phase each comprise a communication interface via which they are connected to a control device (30) controlling the operation of the charging stations (16).

## Revendications

1. Procédé d'électrification d'un réseau ferroviaire (10),
dans lequel, dans une première phase d'exploitation antérieure du réseau ferroviaire (10), une multiplicité de stations de charge (16) est mise à disposition à l'intérieur du réseau ferroviaire (10) et les stations de charge (16) sont conçues respectivement pour un transfert d'énergie électrique à partir d'un réseau d'alimentation électrique (20) vers un dispositif de stockage d'énergie d'un véhicule ferroviaire rechargeable électriquement ; **caractérisé en ce que**
dans une deuxième phase d'exploitation ultérieure du réseau ferroviaire (10), un réseau électrique de transport ferroviaire (13) construit dans le cadre d'une électrification est mis à disposition de manière à ce qu'à l'intérieur du réseau ferroviaire (10) une alimentation électrique d'un véhicule ferroviaire est possible au moins par sections sur un parcours de plusieurs kilomètres, dans lequel l'alimentation électrique est rendue possible le long du parcours par l'électrification du parcours ;
dans lequel les stations de charge (16) déjà existantes dans la première phase d'exploitation sont employées respectivement en tant que dispositifs d'alimentation en énergie dans la deuxième phase d'exploitation pour alimenter en énergie le réseau électrique de transport ferroviaire (13) afin d'approvisionner en courant le réseau électrique de transport ferroviaire (13) et former une sous-station du réseau électrique de transport ferroviaire (13).

2. Procédé selon la revendication 1,
dans lequel un dispositif de transmission de courant est associé à chaque station de charge (16) afin de transmettre de l'énergie électrique au dispositif de stockage d'énergie électriquement chargeable d'un véhicule ferroviaire.

3. Procédé selon la revendication 2,
dans lequel les dispositifs de transmission de courant (16) dans la deuxième phase d'exploitation sont intégrés au moins partiellement dans le réseau électrique de transport ferroviaire (13).

4. Procédé selon l'une des revendications précédentes, dans lequel les stations de charge (16) restent stationnaires à leur localisation d'origine pour le changement de la première phase d'exploitation vers la deuxième et sont reliées au réseau électrique de transport ferroviaire (13) et/ou à un dispositif de commande.

5. Procédé selon l'une des revendications précédentes,
dans lequel les stations de charge (16) dans la première et/ou la deuxième phase d'exploitation sont exploitées selon au moins une des variantes suivantes :
- les stations de charge (16) transforment une fréquence d'un courant d'entrée à partir du réseau électrique d'alimentation (20) ;
- les stations de charge (16) transforment une tension d'entrée du réseau électrique d'alimentation (20) ;
- les stations de charge (16) transforment un courant d'entrée polyphasé à partir du réseau électrique d'alimentation (20) en un courant de sortie monophasé.

6. Procédé selon l'une des revendications précédentes,
chaque station de charge (16) étant reliée, au plus tard au début de la deuxième phase de fonctionnement, à un dispositif de commande (30) qui commande le fonctionnement des stations de charge (16).

7. Procédé selon la revendication 6,
dans lequel le dispositif de commande (30) commande l'exploitation d'au moins une station de charge (16) en fonction d'au moins une des grandeurs suivantes :
- un rapport du besoin énergétique de consommateurs reliés électriquement au réseau électrique de transport ferroviaire (13) à une énergie pouvant être fournie au moyen du réseau électrique de transport ferroviaire (13) ;
- une chute de tension locale à l'intérieur du réseau électrique de transport ferroviaire (13) ;
- une énergie électrique alimentée dans le réseau électrique de transport ferroviaire (13) à partir d'au moins une autre station de charge (16) et/ou une défaillance fonctionnelle d'une autre station de charge (16) ;
- un rendement dépendant de la puissance de la station de charge (16) ;
- un risque d'apparition de charges déséquilibrées dans le réseau électrique d'alimentation (20).

8. Procédé selon l'une des revendications précédentes,
dans lequel il y a au plus tard dans la deuxième phase d'exploitation une récupération au moins temporaire d'énergie électrique à partir du réseau électrique de transport ferroviaire (13) dans le réseau électrique d'alimentation (20) par le biais d'au moins une station de charge (16).

9. Utilisation de stations de charge (16) d'un réseau ferroviaire (10) qui ont été utilisées dans une première phase d'exploitation antérieure du réseau ferroviaire (10) pour charger des dispositifs de stockage d'énergie de véhicules ferroviaires électriquement rechargeables, pour fournir une alimentation en courant pour un réseau électrique de transport ferroviaire (13) du réseau ferroviaire (10) construit dans le cadre d'une électrification dans une deuxième phase d'exploitation ultérieure du réseau ferroviaire (10) par récupération d'énergie dans le réseau électrique de transport ferroviaire (13), dans laquelle les stations de charge forment une sous-station du réseau électrique de transport ferroviaire, et
dans laquelle le réseau électrique de transport ferroviaire (13) rend une alimentation en courant d'un véhicule ferroviaire (10) possible au moins par sections à l'intérieur du réseau ferroviaire (10) sur un parcours de plusieurs kilomètres,
dans laquelle l'alimentation en courant le long du parcours est rendue possible par l'électrification du parcours.

10. Réseau ferroviaire (10) avec :
- un réseau électrique de transport ferroviaire (13) construit dans le cadre d'une électrification qui est conçu pour une alimentation en courant d'un véhicule ferroviaire sur un parcours de plusieurs kilomètres à l'intérieur du réseau ferroviaire (10), dans lequel l'alimentation en courant le long du parcours est rendue possible par une électrification du parcours ; et
- une multiplicité de stations de charge qui ont été conçues pour charger un dispositif de stockage d'énergie d'un véhicule ferroviaire électriquement rechargeable dans une première phase d'exploitation antérieure d'un véhicule ferroviaire (10) et qui alimentent dans une deuxième phase d'exploitation ultérieure du réseau ferroviaire (10) le réseau électrique de transport ferroviaire (13) par une récupération d'énergie avec du courant ;
dans lequel les stations de charges (16) déjà existantes dans la première phase d'exploitation sont conçues respectivement en tant que dispositifs d'alimentation en énergie, dans la deuxième phase d'exploitation pour alimenter en énergie le réseau électrique de transport ferroviaire (13) afin d'approvisionner en courant le réseau électrique de transport ferroviaire (13) et former une sous-station du réseau électrique de transport ferroviaire (13).

11. Réseau ferroviaire (10) selon la revendication 10,
dans lequel les stations de charge (16) sont respectivement raccordées à un réseau électrique d'alimentation (20) afin de prélever à partir de celui-ci de l'énergie électrique pour l'alimentation du réseau électrique de transport ferroviaire (13).

12. Réseau ferroviaire (10) selon la revendication 10 ou la revendication 11,
dans lequel les stations de charge (16) sont respectivement reliées à un dispositif de commande (30) et le dispositif de commande (30) est conçu pour commander l'exploitation des stations de charge (16).

13. Réseau ferroviaire (10) selon l'une des revendications 10 à 12,
dans lequel les stations de charge (16) comprennent respectivement une interface de communication dans la deuxième phase d'exploitation, par le biais de laquelle elles sont reliées à un dispositif de commande (30) commandant l'exploitation des stations de charge (16).
